Europäisches Patentamt

European Patent Office

Office européen des brevets

(11) Publication number: **0 063 706**
**A2**

# EUROPEAN PATENT APPLICATION

(21) Application number: **82102738.0**

(51) Int. Cl.³: **B 60 K 17/34**

(22) Date of filing: **31.03.82**

(30) Priority: **22.04.81 US 256329**

(71) Applicant: **Rockwell International Corporation, 600 Grant Street, Pittsburgh Pennsylvania 15219 (US)**

(72) Inventor: **Wells, Calvin Gene, 12014 Carney, Warren, Michigan 48089 (US)**
Inventor: **Grabill, Louis Calvin, 1543 Westbrook, Madison Heights, Michigan 48071 (US)**

(43) Date of publication of application: **03.11.82**
**Bulletin 82/44**

(74) Representative: **Leiser, Gottfried, Dipl.-Ing. et al, Patentanwälte Prinz, Bunke & Partner Ernsberger Strasse 19, D-8000 München 60 (DE)**

(84) Designated Contracting States: **BE CH DE FR GB IT LI**

(54) **Tandem drive axle system.**

(57) An improved tandem drive axle system is of the type which is capable of supplying input torque from a vehicle power source to first and second rear drive axles and a front drive axle. The input torque is divided through a differential gear set to allow power to be transmitted from one of the side gears thereof to the second rear drive axle. An output gear associated with the other side gear is capable of transmitting at least a portion of the output torque therefrom to a first gear which is operably coupled to the first rear drive axle. An idler gear is also in driving engagement with the output gear and, in turn, drives a second gear which is selectively coupled to the front drive axle to transmit the remainder of the output torque from the output gear. If the second gear is selectively uncoupled from the forward drive axle, the idler gear and the second gear are allowed to free run.

ACTORUM AG

- 1 -

# TANDEM DRIVE AXLE SYSTEM

## Background of the Invention

Field of the Invention. This invention relates to a tandem drive axle system and, more specifically, to an improvement therein relating to the means for selectively transmitting power to the front drive axle of a vehicle having a front drive axle and first and second rear drive axles.

Description of the Prior Art. This invention relates to a tandem drive axle system for a vehicle which is commonly known as a 6x6 vehicle. Specifically, a 6x6 vehicle is one which includes six wheels on the ground which are all being driven by the vehicle power source. Typically, under normal driving conditions, the drive system of a 6x6 vehicle is capable of being selectively altered to eliminate the application of power to the front drive axle so that in fact only power is being supplied to the two rear axles. In this situation, the vehicle would be appropriately described as a 6x4 vehicle.

At one time, it was common practice to divide power between the front drive axle and the pair of rear drive axles through a transfer case. As shown in U.S. Patent Numbers 2,770,150; 3,095,758; 3,191,708 and 3,495,477, such transfer cases can be utilized to receive an input torque from the vehicle power source or transmission and to supply output torque to a forwardly extending shaft for driving the front drive axle and a rearwardly extending shaft which is capable of driving one or two rear drive axles. While such configurations have been satisfactorily employed in the past, the use of a transfer case involves additional gearing and substantially increases the weight and cost of such a drive system.

Accordingly, in order to eliminate some of the objections of this type of drive system in which a transfer case is required, U.S. Patent Number 4,050,434 discloses a vehicle drive axle system which is capable of being utilized on 6x6 vehicles which can be selectively operated in the 6x4 mode as mentioned hereinabove. Specifically, the vehicle drive system disclosed therein utilizes an input shaft from the vehicle power or transmission system to a interaxle differential configuration to drive a differential gear set having first and second side gear means. The first side gear means includes an output gear while the second side gear means includes a shaft which extends rearwardly to the rearward rear drive axle to provide power thereto. A first gear is in driving engagement with the output gear associated with the first differential side gear to be capable of driving a shaft which is operably coupled to the forwardly positioned rear drive axle. A second gear means is in driving engagement with the first gear means to provide power to a shaft which extends forwardly for driving the front drive axle. There is included means for selectively coupling and uncoupling the forwardly extending shaft for driving the front drive axle from the second gear means to selectively allow the drive system to be operated in either the 6x6 or the 6x4 mode.

U.S. Patent Number 4,050,534 includes a explanation of how the drive axle system disclosed therein will operate under a "ideal operating condition". In this "ideal operating condition", the input power would be equally divided in the differential gear set to provide approximately fifty percent of power to each of the differential side gears. With one of the differential side gears being utilized to provide power to both the front drive axle and one of the rear drive axles, the overall power distribution under this "ideal operating condition" would result in the front drive axle providing approximately twenty-five percent of the power needed to drive the vehicle while the forwardly positioned rear drive axle provided approximately twenty-five percent and the rearward rear drive axle the remaining fifty percent. While this "ideal operating condition" might reasonably conform to most loading conditions for the vehicle, there are some "worst case" situations which cast doubt on the acceptability and reliability of the configuration disclosed therein.

The explanation of the power loading for the drive axle system is basically accurate for the "ideal operating condition" in which the load is relatively evenly distributed, the vehicle is operating on a level surface, and each of the wheels is making non-slipping, frictional contact with the driving surface. However, if the contact with the driving surface is unsatisfactory for one or more of the axles, as explained in U.S. Patent Number 4,050,534, it is not uncommon for such a drive axle system to include a means for "locking out" the interaxle differential to prevent a wheel or pair of wheels on a slippery surface from receiving all of the torque from the interaxle differential and preventing effective movement of the vehicle. In such a condition, it would be possible for the output gear to be receiving substantially all of the input torque if the rearward rear axle associated with the second differential side gear were not making good contact with the driving surface and, therefore, incapable of actually providing power for moving the vehicle. With the output gear receiving substantially all of the input torque, it would all be transmitted to the remaining two axles. The resulting load on the output gear in the configuration as taught in U.S. Patent Number 4,050,534 would be significant and might unnecessarily strain or weaken the teeth thereon.

While the drive axle system disclosed in U.S. Patent Number 4,050,534 might be satisfactory for a number of vehicle installations, the direct coupling of the second gear which drives the front drive axle to the first gear which drives the forwardly positioned rear axle does present a configuration which limits the possible design location of the forwardly extending output shaft for driving the front drive axle. The location of the output shaft for driving the front drive axle can be significant in some vehicles where higher ground clearance is desired or where there is a need to avoid the engine or transmission and provide clearance between the engine or transmission and the output shaft extending forwardly to power the front drive axle.

## Summary of the Invention

It is, therefore, an object of this invention to provide an improved tandem drive axle system which is reliable and capable of being designed to accommodate special vehicle configurations.

These and other objects of the invention are provided in a preferred embodiment thereof which includes an improved tandem drive axle system of the type which is capable of receiving input torque from a vehicle power source and transmitting the torque to first and second rear drive axles and a front drive axle. There is also included means for dividing the input torque through a differential gear set having first and second differential side gears. Each of the side gears transmits output torque of a magnitude which is substantially one-half of the input torque under ideal operating conditions. The first differential side gear includes an output gear in driving engagement with a first gear means for transmitting at least a portion of the output torque from the first differential side gear to the first rear drive axle. The second differential side gear is operably coupled to the second rear drive axle for transmission of the output torque from the second differential side gear. The improvement includes an idler gear means in driving engagement with the output gear and a second gear means in driving engagement with the idler gear means to be capable of transmitting a remainder of the output torque of the first differential side gear from the output gear through the idler gear means to the forward drive axle shaft. There is also included means for selectively coupling the second gear means to the front drive axle for transmitting the remainder of the output torque thereto and for uncoupling the second gear means from the front drive axle to allow free running of the idler gear means and second gear means.

Brief Description of the Drawings

Figure 1 is a schematic top plan view showing the drive axle system of the present invention as it would appear in a 6x6 vehicle.

Figure 2 is a schematic view of the drive axle system as it would generally appear along the line 2-2 of Figure 1.

Figure 3 is a view partially in section of a preferred embodiment of the invention as would generally be seen along line 3-3 of Figure 2.

Description of the Preferred Embodiment

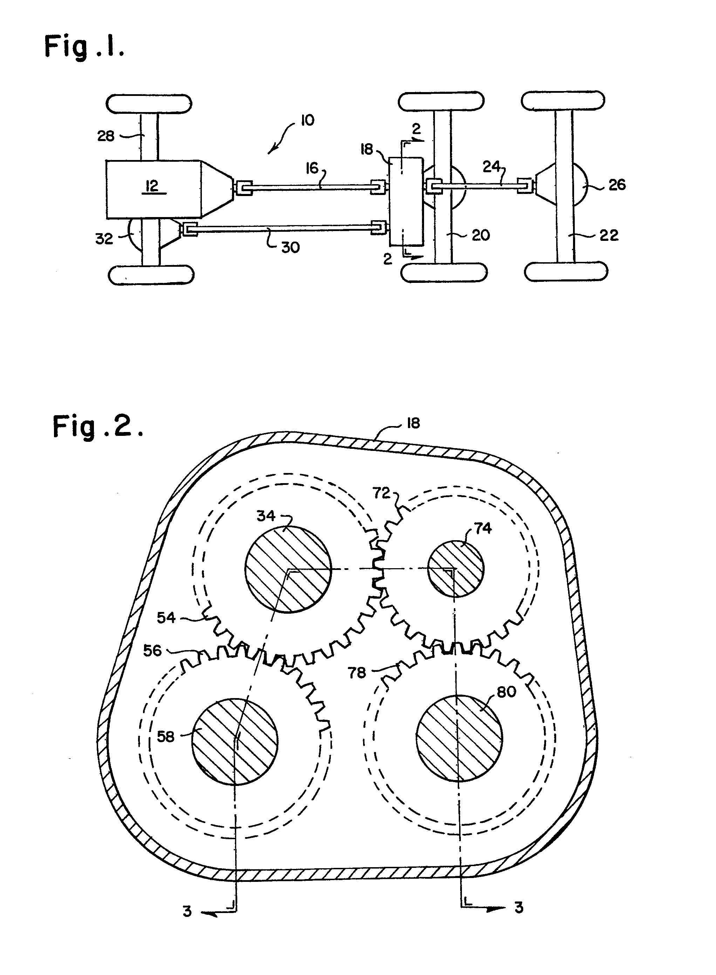

As seen in Figure 1, a schematic view of a 6x6 vehicle 10 includes various features of the drive axle system of the present invention. The vehicle power source 12 includes an engine and transmission and has a drive shaft 16 which extends rearwardly therefrom. The drive shaft 16 is coupled to a shaft within a interaxle differential housing 18 which is physically associated with the forwardly positioned rear axle 20 of a pair of tandem rear drive axles 20, 22. In the preferred embodiment, the interaxle differential housing 18 basically includes the components which are utilized to divide and transfer the power to the various members of the drive axle system. The interaxle differential within the housing 18 divides a single input torque and supplies a portion of its output power through an axle differential to the forwardly positioned rear axle 20. A second drive shaft 24 receives the remaining output torque and extends rearwardly from the interaxle differential within the housing 18 to drive another axle differential 26 of the rearwardly positioned rear axle 22.

To provide power to a front steering, drive axle 28 for the vehicle 10, a third drive shaft 30 extends forwardly from the interaxle differential housing 18 to be coupled with yet another axle differential 32 of the forward drive axle 28. As thus described, power can be provided from the power source 12 to the interaxle differential within the housing 18 which, as will be explained in detail hereinbelow, is capable of dividing the input power to provide an output power to each of the axles 20, 22 and 28 when the vehicle is being operated in a 6x6 mode. As will also be seen, there is included means associated with the vehicle drive system of the present invention for uncoupling the third drive shaft 30 to prevent power from being applied to the front drive axle 28 so that the vehicle could be operated in a 6x4 mode.

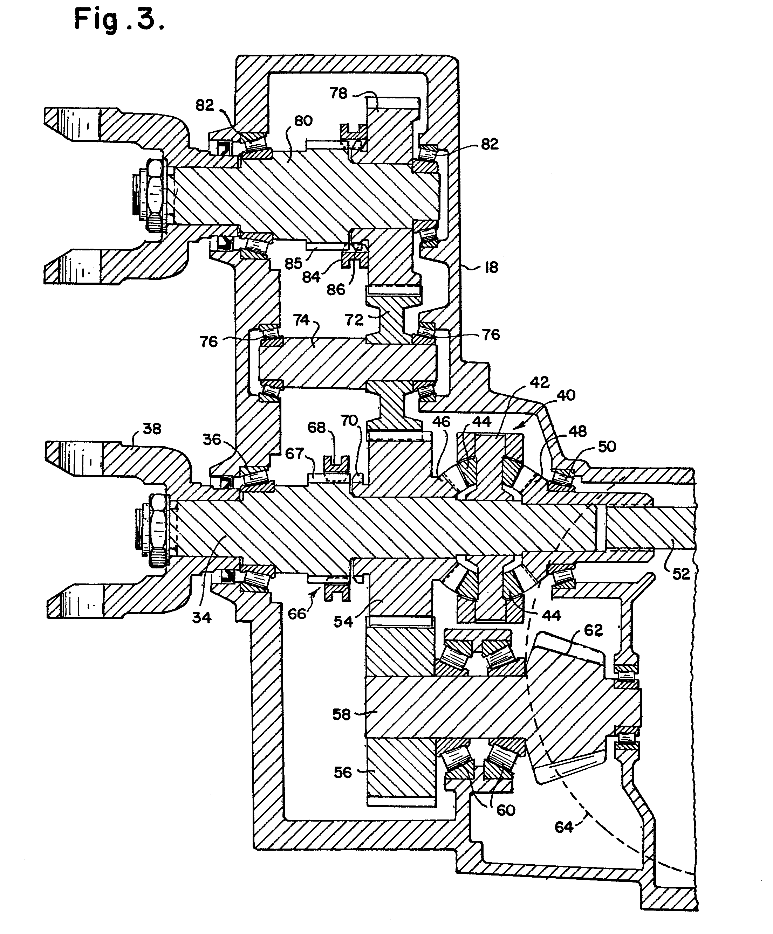

As seen in Figures 2 and 3, the interaxle differential housing 18 includes the major elements of the present invention which divide and transmit power to the various axles. Specifically, an input shaft 34 is mounted for rotation within the interaxle differential housing 18 at bearings 36 and includes a coupling 38 to which the drive shaft 16 (not shown) is joined. An interaxle differential gear set 40 is mounted at the rearward end of the input shaft 34 and includes a differential cage and spider 42 which is rigidly coupled to the shaft 34. The differential cage and spider 42 includes pinion gears 44 which are capable of transmitting power to a first differential side gear 46 and a second differential side gear 48.

The differential side gear 46 is mounted on the input shaft 34 and is capable of independent relative rotation thereon. Similarly, the second differential side gear 48 is mounted on the input shaft 34 to be capable of independent relative rotation thereon and is basically supported by bearings 50 which also serve to support the rear end of the input shaft 32 because of the manner in which the side gear 48 receives the rear end of the input shaft 34 therein. The second differential side gear 48 is rigidly joined to a rearwardly extending shaft means 48 which extends from the rear of the interaxle differential housing 18 to be there coupled with the second rearwardly extending drive shaft 24 (not shown). Accordingly, power received at the second differential side gear 48 is capable of providing power to the rearwardly positioned rear axle 22 in the manner described hereinabove.

The first differential side gear 46 includes at its forward end an output gear 54 which is capable of transmitting the output power received by the first differential side gear 46. To transmit a portion of the output power from the first differential side gear 46 to by the forwardly positioned rear axle 20, a first gear 56 is aligned with and in engaging contact with the output gear 54. The first gear 56 is rigidly mounted on a shaft 58 which is, in turn, mounted for rotation at bearings 60 within the interior of the interaxle differential housing 18. An input pinion 62 is mounted at the rearward end of the shaft 58 and is in engaging contact with a differential ring gear 64 which drives an axle differential mechanism (not shown) for providing the output torque to the forwardly positioned rear drive axle 20.

As thus described, the input torque from the power source 12 is capable of being supplied to the rear axles 20 and 22 as it is being divided by the interaxle differential gear set 40. Specifically, under an ideal operating condition in which the vehicle is operating on a relatively level surface with a generally evenly distributed load on the various axles, the output torque at each of the differential side gear 46, 48 would be about one-half of the input torque received from the power source 12. If the vehicle were to be operating in a 6x4 mode, the drive axle system as thus described would be operating in a manner well known in the art with the interaxle differential 40 basically dividing all of the load between the two rear tandem axles 20 and 22. The interaxle differential 40 is considered necessary because of the real possibility that the load in actual operation would not be evenly distributed between the two axles and the interaxle differential would still enable the vehicle to operate while allowing some slippage or varying taction conditions between the two axles 20, 22.

However, as is also well known in the drive axle art, there are occasions when the differentiation provided by the interaxle differential 40 is not desired. Since it is possible for the wheels associated with one of the axles 20, 22 to be in such a non-traction condition that no power could be applied to the driving surface for the movement of the vehicle, there is quite often included means for "locking out" the differential to insure that both axles move simultaneously and that either axle making sufficient contact with the driving surface would be capable of propelling the vehicle. To accomplish this, a clutch means 66 is mounted on the input shaft 34 on a set of outwardly extending teeth 67 thereof. As shown in Figure 3, the clutch means 66 is forwardly positioned so that it is, in fact, not affecting the differentiation which is provided by the interaxle differential 40. However, in order to achieve the "lock out" condition to prevent differentiation, there is means in the form of a shift rod and fork (not shown) which can act on the circumferential groove 68 of the clutch means 66 to cause it to be moved axially rearwardly on the teeth 67 of the input shaft 34. When the clutch means 66 is moved sufficiently rearwardly, it is brought into alignment with and engages a set of gear teeth 70 on the forward end of the first differential side gear 46 to couple the first differential side gear 46 directly to the input shaft 34. When the first differential side gear 46 is so coupled to the input shaft 34, there would be no further differentiation and the input torque would then be transmitted either through the output gear 54 or the rearwardly extending shaft 52 according to the resistance created by each rear axle 20, 22 as each makes contact with the driving surface.

As mentioned hereinabove, the present invention and the drive axle system disclosed in U.S. Patent Number 4,050,534 both include means within the differential housing 18 for providing output to the front drive axle 28. In U.S. Patent Number 4,050,534 this is accomplished by there being an additional gear in driving engagement with the first gear 56 so that the output torque received at the output gear 54 will be capable of providing power to both the front drive axle 28 and the forwardly positioned rear drive axle 20. As a result, all of the power which is transmitted to these two axles will be specifically transmitted at a single engaging contact point between the output gear 54 and the first gear 58. However, in a worst case situation, there could be sufficient slippage in the rearwardly positioned rear axle 22 for the operator of the vehicle to cause the clutch means 66 to be utilized to prevent differentiation by the interaxle differential 40. If the vehicle is heavily loaded and there is excellent road traction for the front drive axle 28 and the forwardly positioned rear axle 20, all of the input power from the power source would be transmitted to these two axles through the single output gear 54. Although this would not be a normal operating condition, it would not be unusual for this high loading situation to periodically occur. The resulting stress and wear on the teeth of the output gear 54 at their single engaging contact point with the first gear 56 could be significant and adversely to affect the overall reliability and life of the drive axle system.

Accordingly, in the preferred embodiment, to provide power to the front drive axle 28 there is included a idler gear 72 which is in engaging contact with the output gear 54 but at a location thereon which is circumferentially spaced from the point of engagement with the first gear 56. The idler gear 72 is rigidly mounted on an idler shaft 74 which is mounted for rotation on bearings 76 within the interaxle differential housing 18. To provide power for the front drive axle 28, there is included a second gear 78 which engages the idler gear 72 so that both gears 72, 78 will rotate in response to rotation of the output gear 54.

The second gear 78 is mounted on a shaft 80 and is capable of independent relative rotation thereon. The shaft 80 is mounted within the interaxle differential housing 18 at bearings 82 and includes a forward end which is capable of being coupled to the forwardly extending drive shaft 30 for providing power to the front drive axle 28. The second gear 78 is not rigidly mounted on the shaft 80 in the preferred embodiment of the invention in order to include a means for selectively transmitting power to the front drive axle 28. This is accomplished in a manner well known in the power transmitting art in the form of a clutch 84 which is similar in function and operation to the clutch means 66 described hereinabove. The clutch 84 is mounted on outwardly extending teeth 85 of the shaft 80 and can be selectively, rearwardly positioned to engage outwardly extending teeth 86 on the second gear 78 to rigidly couple the second gear 78 to the shaft 80 for the transmission of power to the front drive axle 28 when the 6x6 mode of operation is desired. Relocating the clutch 84 to a forward position would uncouple the second gear 78 from the shaft 80 and allow the idler gear 72 and the second gear 78 to run freely without any transmission of power to the front drive axle 28 and thus return the vehicle to the 6x4 mode of operation.

However, with the configuration utilized in the present invention, if the vehicle were to again be operating in a worst case situation with the interaxle differential "locked out", the power being transmitted to the axle 28 and 20 would no longer be concentrated at one location on the output gear 54. Basically, half of the load being provided to the forward drive axle 28 would be transmitted from the output gear 54 at its engagement with the idler gear 72 and the remaining half of the output torque for driving the forwardly positioned rear axle 20 would be transmitted to the first gear 56 as it makes contact at a different circumferential location with the output gear 54. The wear and stress on the teeth of the output gear 54 is significantly reduced to improve the overall relaibility of the preferred drive axle system when compared to the prior art.

0063706

As thus described, the present invention provides power in a same manner as is generally disclosed in U.S. Patent Number 4,050,534 but includes means for insuring the reliability of the drive axle system in a worst case condition. Additionally, there are design limitations in the drive axle system disclosed in U.S. Patent Number 4,050,534 which predetermine the relative locations of the shafts which are extending from the interaxle differential casing to provide power to the various axles. Because the gear providing power to the front drive axle in this prior art drive axle system is engaging the gear which provides power to the forwardly positioned rear axle, there is a limited range of locations for the forwardly extending output shaft relative to the input shaft receiving power from the power source. However, with the use of an idler gear, as provided in the present invention, the shaft which provides power to the front drive axle could be repositioned vertically or horizontally relative to the shaft driving the forwardly positioned rear axle without having to be a predetermined distance therefrom. It would even be possible if the idler gear is made longer for the second gear to be relocated axially forward in a transverse plane which is different from and separated from the transverse plane of the first gear. In this position, the second gear could be reoriented to partially "overlie" the first gear when viewed from the front as their respective shafts extend forwardly and rearwardly therefrom. Therefore, by including the idler gear 72, the drive axle system of the present invention is capable of providing a better distribution of power from the output gear 54 and allowing greater flexibility in the design location of the shafts which extend from the interaxle differential casing 18 for the operation of the forward drive axle 28 and the forwardly positioned rear axle 20.

- 12 -

WE CLAIM:

1. An improved tandem drive axle system of the type which is capable of receiving input torque from a vehicle power source and transmitting torque to first and second rear drive axles and a front drive axle and includes means for dividing input torque through a differential gear set having first and second differential side gear, each of said side gear transmitting output torque of a magnitude which is substantially one-half of said input torque under ideal operating conditions, said first differential side gear including an output gear in driving engagement with a first gear means for transmitting at least a portion of said output torque from said first differential side gear to said first rear drive axle, said second differential side gear being operably coupled to said second rear drive axle for transmission of said output torque of said second differential side gear to said second rear drive axle, said inmprovement comprising:

an idler gear means in driving engagement with said output gear at a location thereon which is circumferentially separated from said first gear means;

a second gear means in driving engagement with said idler gear means to be capable of transmitting a remainder of said output torque of said first differential side gear from said output gear through said idler gear means to said front drive axle; and

means for selectively coupling said second gear means to said front drive axle to transmit said remainder of said output torque thereto and uncoupling said second gear means from said front drive axle to allow free running of said idler gear means and said second gear means.

0063706

2. The improved tandem drive axle system as set forth in claim 1, further including means for locking out said differential gear set so that a worst case situation would include said output torque of said first differential side gear being substantially equal to said input torque.

Fig.1.

Fig.2.

0063706

# Fig.3.